# EUROPÄISCHE PATENTSCHRIFT

(11) **EP 3 743 815 B1**
(45) Veröffentlichungstag und Bekanntmachung des Hinweises auf die Patenterteilung: **14.08.2024**
(21) Anmeldenummer: 19701798.1
(22) Anmeldetag: 17.01.2019
(51) Int. Cl.: G06F 11/22, G06F 11/30, G07C 5/00, G07C 5/08, G05D 1/00, B60W 50/02, B60W 50/04

(54) **VORRICHTUNG UND VERFAHREN ZUM REGISTRIEREN UND ÜBERWACHEN AUTONOMER FAHRZEUGE**
APPARATUS AND METHOD FOR REGISTERING AND MONITORING AUTONOMOUS VEHICLES
DISPOSITIF ET PROCÉDÉ D'ENREGISTREMENT ET DE SURVEILLANCE DE VÉHICULES AUTONOMES

(30) Priorität: 25.01.2018 DE 102018201130
(43) Veröffentlichungstag der Anmeldung: 02.12.2020
(73) Patentinhaber: Robert Bosch GmbH, 70442 Stuttgart (DE)
(72) Erfinder: EWERT, Marlon Ramon, 74199 Untergruppenbach (DE)
(86) Internationale Anmeldenummer: PCT/EP2019/051094
(87) Internationale Veröffentlichungsnummer: WO 2019/145209

(56) Entgegenhaltungen:
- EP-A2- 2 458 564
- WO-A1-01/90892
- DE-A1- 102004 049 297
- DE-A1- 102015 010 203
- US-A1- 2006 156 129
- ANONYMOUS: "Ihr Autopilot ist da", 14 October 2015 (2015-10-14), XP055578388, Retrieved from the Internet <URL:https://www.tesla.com/de_DE/blog/your-autopilot-has-arrived%20?redirect=no> [retrieved on 20190408]

## Beschreibung

### Stand der Technik

Die Erfindung betrifft ein Verfahren zum Registrieren und Überwachen autonomer Fahrzeuge, wobei ein Datensatz umfassend Angaben zu Hardwarekomponenten und Softwarekomponenten des autonomen Fahrzeugs an eine zentrale Einrichtung übertragen wird. Weitere Aspekte der Erfindung betreffen ein autonomes Fahrzeug, eine zentrale Einrichtung sowie Computerprogrammprodukte, welche zur Ausführung des Verfahrens eingerichtet sind.

Moderne Fahrzeuge sind zunehmend mit Fahrassistenzsystemen ausgestattet, die einen Fahrer bei der Ausübung verschiedener Fahrmanöver unterstützen sollen. Des Weiteren sind aus dem Stand der Technik Entwicklungen bekannt, mit denen Fahrzeuge vollständig autonom betrieben werden, wobei keine Eingriffe eines Fahrers in die Steuerung des Fahrzeugs erforderlich sind. Zudem sind hochautomatisierte Fahrzeuge bekannt, bei denen das Fahrzeug einzelne Fahrmanöver automatisch durchführt, wobei dabei sowohl eine Längsführung als auch eine Querführung des Fahrzeugs übernommen werden. Diese Systeme werden gegebenenfalls von einem Fahrer beaufsichtigt oder übergeben bei Erkennen einer für das automatisierte Fahren ungeeigneten Situation die Kontrolle zurück an den Fahrer des Fahrzeugs.

Zur Bereitstellung automatisierter Fahrfunktionen, welche beispielsweise ein Fahrzeug dauerhaft oder zeitweilig in allen oder in bestimmten Verkehrssituationen führt, umfassen die Fahrzeuge Hardwarekomponenten wie einen Computer und Softwarekomponenten. Aus Sicherheitsgründen ist es wünschenswert, die eingesetzten Hardwarekomponenten und Softwarekomponenten eindeutig identifizieren zu können.

Aus DE 10 2008 061 304 A1 ist ein Verfahren und eine Vorrichtung zum Übertragen von Fahrzeugrelevanten Informationen an ein anderes Fahrzeug oder an Infrastruktur bekannt. Zur Übertragung der Informationen werden verschiedene Verfahren zur drahtlosen Kommunikation verwendet, welche beispielsweise WLAN und einen zur Übertagung von Zugangsberechtigungen verwendeten Funkstandard umfassen. Die übertragenen Informationen können beispielsweise eine Fahrzeugposition, eine Fahrzeug-Identifizierungsnummer sowie eventuell vorliegende Warnmeldungen umfassen.

Das Dokument WO 01/90892 A1 beschreibt die Registrierung und Überwachung eines Client-Servers.

Das Dokument DE 10 2015 010203 A1 beschreibt das Bereitstellen autonomer Fahrfunktionen für autonome Fahrzeuge.

Nachteilig an den bekannten Verfahren ist, dass eine Überwachung der für das Bereitstellen von automatisierten Fahrfunktionen erforderlichen Komponenten nicht erfolgt.

### Offenbarung der Erfindung

Es wird ein Verfahren zum Registrieren und Überwachen autonomer Fahrzeuge vorgeschlagen. Die autonomen Fahrzeuge weisen mindestens eine Hardwarekomponente und/oder mindestens eine Softwarekomponente für das Bereitstellen einer autonomen Fahrfunktion auf. Bei dem Verfahren ist vorgesehen, in einem ersten Schritt a) einen Datensatz an eine zentrale Einrichtung zu übertragen, wobei der Datensatz Angaben zu der mindestens einen Hardwarekomponente und/oder zu der mindestens einen Softwarekomponente des autonomen Fahrzeugs enthält. In einem nachfolgenden Schritt b) wird der Datensatz durch die zentrale Einrichtung empfangen und zusammen mit einem dem Fahrzeug zugeordneten Identifikator gespeichert. Anschließend erfolgt durch die zentrale Einrichtung in einem Schritt c) des Verfahrens ein Senden einer Bestätigung über die erfolgreiche Speicherung an das autonome Fahrzeug. In einem weiteren Schritt d) wird die Bestätigung durch das autonome Fahrzeug empfangen und gespeichert. In einem nachfolgenden Schritt e) wird durch das autonome Fahrzeug eine durch die mindestens eine Hardwarekomponente und/oder durch die mindestens eine Softwarekomponente bereitgestellte autonome Fahrfunktion in Abhängigkeit der gespeicherten Bestätigung freigeschaltet.

Im Betrieb des autonomen Fahrzeugs erfolgt dann als Schritt f) des Verfahrens ein Aussenden des dem autonomen Fahrzeug zugeordneten Identifikators durch das autonome Fahrzeug. Dabei können gegebenenfalls weitere Daten wie z.B. eine Fahrzeugposition zusätzlich ausgesendet werden. Der ausgesendete dem autonomen Fahrzeug zugeordnete Identifikator wird in einem Schritt g) des Verfahrens empfangen. Im nachfolgenden Schritt h) erfolgt ein Abgleichen des zu diesem Identifikator in der zentralen Einrichtung gespeicherten Datensatzes oder von aus dem Identifikator dekodierten Angaben mit Informationen zu fehlerhaften Hardwarekomponenten und/oder Softwarekomponenten. Wird bei dem Abgleich eine fehlerhafte Hardwarekomponente oder Softwarekomponenten festgestellt, so wird in einem sich anschließenden Schritt i) ein Signal zum Einleiten einer Aktion an das autonome Fahrzeug übermittelt. Das Signal wird anschließend in einem Schritt j) des Verfahrens durch das autonome Fahrzeug empfangen und das autonome Fahrzeug führt die durch das Signal geforderte Aktion aus.

Das Verfahren oder bestimmte Schritte des Verfahrens können einmalig ausgeführt werden oder periodisch oder ausgelöst von bestimmten Ereignissen wiederholt ausgeführt werden. Beispielsweise werden die Schritte a) bis e) zur Registrierung des autonomen Fahrzeugs einmalig oder ausgelöst von bestimmten Ereignissen wiederholt ausgeführt. Das Aussenden des Identifikators gemäß Schritt f) erfolgt bevorzugt periodisch, also regelmäßig wiederholt, während des Betriebs des autonomen Fahrzeugs, nachdem die Schritte a) bis e) zumindest einmalig durchlaufen wurden. Das autonome Fahrzeug ist im Betrieb bevorzugt fortlaufend empfangsbereit, so dass der Schritt j) nach einem zumindest einmaligen durchlaufen der Schritte a) bis e) in Reaktion auf ein empfangenes Signal ausgeführt werden kann. Die zentrale Einrichtung ist bevorzugt eingerichtet, mit einer Vielzahl von autonomen Fahrzeugen in Verbindung zu stehen, so dass die von der zentralen Einrichtung auszuführenden Schritte entsprechend wiederholt in Reaktion auf einen gemäß Schritt b) empfangenen Datensatz bzw. in Reaktion auf einen empfangen Identifikator gemäß Schritt g) ausgeführt werden.

Bei der autonomen Fahrfunktion handelt es sich beispielsweise um Fahrfunktionen, welche das autonome Fahrzeug in bestimmten Verkehrssituationen steuern, wobei dazu bevorzugt sowohl die Längsführung, also das Beschleunigen und Abbremsen des Fahrzeugs, als auch die Querführung, also das Lenken des Fahrzeugs, übernommen wird. Derartige Verkehrssituationen können beispielsweise das Einparken oder das Ausparken des Fahrzeugs, das Durchfahren einer Baustelle, das Fahren auf einer Autobahn und das Fahren in einem Stau umfassen. Des Weiteren kann die autonome Fahrfunktion eingerichtet sein, das Fahrzeug vollständig ohne Aufsicht durch einen Fahrer zu führen. Die autonome Fahrfunktion kann beispielsweise in Form einer künstlichen Intelligenz ausgeführt sein, welche in Form von Softwarekomponenten und/oder Hardwarekomponenten vorliegt.

Die Übertragung des Datensatzes an die zentrale Einrichtung sowie das Empfangen der Bestätigung bzw. eines Signals zum Einleiten einer Aktion erfolgt bevorzugt über eine drahtlose Datenverbindung. Hierzu können verschiedene Techniken zur Übertragung von Daten eingesetzt werden, welche beispielsweise unter der Bezeichnung Car-to-Infrastructure (C2I) bekannt sind. Die Übertragung kann auch über drahtlose Kommunikationsmittel wie Mobilfunkverbindungen, beispielsweise LTE, UMTS oder GSM, sowie WLAN oder dergleichen erfolgen.

Bei der zentralen Einrichtung kann es sich insbesondere um eine zentrale Computereinrichtung wie einen Server, insbesondere einen Cloudserver, handeln, welche mit dem autonomen Fahrzeug kommunizieren kann. Hierzu kann die zentrale Einrichtung beispielsweise mit entsprechenden Infrastrukturelementen verbunden sein, welche die drahtlose Kommunikation mit dem autonomen Fahrzeug erlauben. Des Weiteren ist es denkbar, dass das autonome Fahrzeug über eine drahtlose Internetverbindung verfügt und über das Internet mit der zentralen Einrichtung kommuniziert.

Bevorzugt sind die Angaben im Datensatz ausgewählt aus der Gruppe umfassend Fahrzeugtyp, Fahrzeugvariante, Softwaretyp, Softwareversion, Hardwaretyp, Hardwareversion, Angaben zu bereitgestellten autonomen Fahrfunktionen, Fahrgestellnummer und Kombinationen mehrerer dieser Angaben.

Ist die autonome Fahrfunktion in Form einer künstlichen Intelligenz realisiert, so umfassen die Angaben im Datensatz entsprechend insbesondere Angaben zu dem Typ und der Version der mindestens einen Softwarekomponente sowie gegebenenfalls dem Typ und der Version der mindestens einen Hardwarekomponente, welche die künstliche Intelligenz bereitstellen.

Bevorzugt umfasst der Datensatz als eine Angabe einen dem autonomen Fahrzeug zugeordneten Identifikator. Dieser ist ein für das autonome Fahrzeug eindeutiges Kennzeichen und wird beispielsweise bei der Herstellung des Fahrzeugs vergeben und dauerhaft im autonomen Fahrzeug gespeichert, beispielsweise in einem nicht-flüchtigen Speicher einer Hardwarekomponente oder in einem Steuergerät des autonomen Fahrzeugs.

Alternativ hierzu wird durch die zentrale Einrichtung aus den Angaben im gemäß Schritt b) empfangen Datensatz ein eindeutiger dem autonomen Fahrzeug zugeordneter Identifikator generiert. Dieser Identifikator wird anschließend als Teil der Bestätigung gemäß Schritt c) an das autonome Fahrzeug gesendet und gemäß Schritt d) durch das autonome Fahrzeug gespeichert. Diese Erzeugung des Identifikators muss nur einmalig durchlaufen werden. Bevorzugt wird der empfangene Identifikator in einem dem autonomen Fahrzeug zugeordneten nicht-flüchtigen Speicher abgelegt, beispielsweise in einem Speicher eines Steuergeräts oder einer Hardwarekomponente des autonomen Fahrzeugs.

Der auf diese Weise erzeugte eindeutige Identifikator umfasst bevorzugt ausgewählte Angaben aus dem Datensatz in kodierter Form. Diese Angaben können insbesondere ausgewählt sein aus einer Hardwareversion und einer Softwareversion mindestens einer Hardwarekomponente und/oder mindestens einer Softwarekomponente des autonomen Fahrzeugs. Auf diese Weise kann beispielswiese eine Identifikation der verwendeten Softwareversion einer Softwarekomponente allein unter Verwendung einer empfangenen Identifikation erfolgen, ohne dass ein Abgleich mit dem gespeicherten Datensatz erfolgen muss.

In einer Ausführungsvariante des Verfahrens kann vorgesehen sein, bereits im Rahmen der Registrierung eines autonomen Fahrzeugs, also dem Durchlaufen der Schritte a) bis e) des Verfahrens einen Abgleich der Angaben im übermittelten Datensatz mit Informationen zu fehlerhaften Hardware- und/oder Softwarekomponenten durchzuführen. Entsprechend kann vorgesehen sein, die Bestätigung über die erfolgte Speicherung des Datensatzes in der zentralen Einrichtung nur dann zu senden bzw. das Freischalten der autonomen Fahrfunktion gemäß Schritt e) nur dann zu erlauben, wenn keine fehlerhafte Hardware- oder Softwarekomponente erkannt wurde.

Das Aussenden des Identifikators kann beispielsweise periodisch in festen Zeitabständen erfolgen, beispielsweise einmal am Tag, oder einmal pro Stunde. Des Weiteren kann beispielsweise vorgesehen sein, dass das autonome Fahrzeug seinen eindeutigen Identifikator immer dann aussendet, wenn das autonome Fahrzeug Informationen mit Einrichtungen der Verkehrsinfrastruktur austauscht.

Der ausgesendete Identifikator kann durch die zentrale Einrichtung selbst oder durch andere Einrichtungen wie durch eine Infrastrukturkomponente wie ein Kommunikationsnetzwerk oder einem Verkehrsleitsystem empfangen werden. Der empfange Identifikator kann für den folgenden Abgleich an die zentrale Einrichtung weitergeleitet werden. Dies ist beispielsweise sinnvoll, wenn die Infrastrukturkomponente teil eines Kommunikationsnetzwerks wie eines Mobilfunknetzes ist. Alternativ dazu, insbesondere dann, wenn der Identifikator ausgewählte Angaben in kodierter Form enthält, kann der Abgleich mit Informationen zu fehlerhaften Hardware- und/oder Softwarekomponenten sowie das Übermitteln eines Signals zum Einleiten einer Aktion auch von einer anderen Einrichtung ohne Mitwirkung der zentralen Einrichtung ausgeführt werden. Beispielsweise kann der Abgleich und das Übermitteln des Signals von der Infrastrukturkomponente erfolgen, welche den Identifikator empfangen hat.

Bei einer Infrastrukturkomponente kann es sich beispielsweise um Verkehrsleitsysteme handeln, welche autonomen Fahrzeugen Verkehrsrelevante Daten zur Verfügung stellen.

Bevorzugt ist die nach dem Erkennen einer fehlerhaften Hardwarekomponente oder Softwarekomponente auszulösende Aktion ausgewählt aus Überführen des autonomen Fahrzeugs in einen sicheren Zustand, Stilllegen des autonomen Fahrzeugs, Deaktivieren der autonomen Fahrfunktion, Übermitteln aktualisierter Softwarekomponenten, Ausgeben einer Benachrichtigung und Kombinationen mehrerer dieser Aktionen.

Das Überführen des Fahrzeugs in einen sicheren Zustand kann beispielsweise umfassen, dass das Fahrzeug autonom eine sichere Halteposition ansteuert, wobei nach Ankunft an der sicheren Position die autonome Fahrfunktion deaktiviert wird. Eine Weiterfahrt des autonomen Fahrzeugs kann dann unter manueller Steuerung durch einen Fahrer erfolgen.

Vor dem Übermitteln aktualisierter Softwarekomponenten wird das Fahrzeug bevorzugt zunächst in einen sicheren Zustand versetzt.

Gemäß nicht beanspruchten Varianten erfolgt das Übertragen des Datensatzes gemäß Schritt a) nach Fertigstellung des autonomen Fahrzeugs oder nach Kauf des autonomen Fahrzeugs. Erfindungsgemäß erfolgt das Übertragen des Datensatzes gemäß Schritt a) nach Austausch einer Hardwarekomponente und/oder nach Aktualisierung einer Softwarekomponente.

Wird beispielsweise erkannt, dass die zur Bereitstellung einer autonomen Fahrfunktion verwendete Softwarekomponente fehlerhaft ist, da diese in bestimmten Verkehrssituationen nicht korrekt funktioniert, so kann durch Übermitteln eines entsprechenden Signals an das autonome Fahrzeug die betreffende autonome Fahrfunktion deaktiviert werden. Im Anschluss kann als weitere Aktion eine Aktualisierung der Softwarekomponente vorgenommen werden. Nach Abschluss der Aktualisierung wird gemäß dem vorgeschlagenen Verfahren eine erneute Registrierung der Hardware- und Softwarekomponenten durchgeführt, indem das Verfahren beginnend von Schritt a) an ausgeführt wird.

Entsprechend wird ein Datensatz, der unter anderem Angaben zu der aktualisierten Softwarekomponente enthält an die zentrale Einrichtung übermittelt. Nach dem Empfang einer entsprechenden Bestätigung durch die zentrale Einrichtung kann dann die autonome Fahrfunktion wieder freigeschaltet werden.

Wird beispielsweise eine fehlerhafte Hardwarekomponente erkannt, kann das autonome Fahrzeug zunächst in einen sicheren Zustand überführt werden. Anschließend kann ein Austausch der entsprechenden Hardwarekomponente in einer Werkstatt veranlasst werden. Nach Abschluss des Austauschs der fehlerhaften Hardwarekomponente wird gemäß dem vorgeschlagenen Verfahren eine erneute Registrierung der Hardware- und/oder Softwarekomponenten durchgeführt, indem das Verfahren beginnend von Schritt a) an ausgeführt wird. Entsprechend wird ein Datensatz, der unter anderem Angaben zu der aktualisierten Hardware- und/oder Softwarekomponente enthält an die zentrale Einrichtung übermittelt. Nach dem Empfang einer entsprechenden Bestätigung durch die zentrale Einrichtung kann dann die autonome Fahrfunktion wieder freigeschaltet werden.

Beim Freischalten der autonomen Fahrfunktion wird die Bestätigung der zentralen Einrichtung bevorzugt geprüft um sicherzustellen, dass die Bestätigung tatsächlich von der zentralen Einrichtung stammt. Nur bei einer korrekten Bestätigung erfolgt die Freischaltung.

Bevorzugt ist eine Schnittstelle zwischen der zentralen Einrichtung und einem oder mehreren Verzeichnisdiensten vorgesehen. Die Verzeichnisdienste stellen Angaben zu fehlerhaften sowie fehlerfreien bzw. erlaubten Hardwarekomponenten und/oder Softwarekomponenten zur Verfügung. Bei dem Verzeichnisdienst kann es sich beispielsweise um einen von einer Behörde oder einer Zulassungsstelle bereitgestellten Dienst handeln, welcher der zentralen Einrichtung die entsprechenden Angaben übermittelt. Des Weiteren kann es sich bei dem Verzeichnisdienst um einen von einem Zulieferer oder Hersteller einer Hardwarekomponente und/oder Softwarekomponente bereitgestellten Dienst handeln, welcher die entsprechenden Angaben an die zentrale Einrichtung übermittelt. Ebenfalls ist es möglich, dass der Hersteller des autonomen Fahrzeugs einen solchen Verzeichnisdienst zur Verfügung stellt. Über die Schnittstelle können die Angaben in einem Speicher der zentralen Einrichtung hinterlegt werden und/oder die zentrale Einrichtung kann aktuelle Angaben aus dem jeweiligen Verzeichnisdienst abrufen. Auf diese Weise ist es beispielweise möglich, dass ein autonomes Fahrzeug mit einer fehlerhaften Hardware- und/oder Softwarekomponente von einer behördlichen Stelle deaktiviert werden kann oder dass eine behördliche Stelle eine veraltete Software aktualisieren kann.

Erfindungsgemäß werden weiterhin Computerprogramme vorgeschlagen, gemäß denen jeweils die durch das autonome Fahrzeug und die durch die zentrale Einrichtung auszuführenden Schritte der hierin beschriebenen Verfahren durchgeführt werden, wenn das Computerprogramm auf einer programmierbaren Computereinrichtung ausgeführt wird. Die Computerprogramme können auf einem maschinenlesbaren Speichermedium gespeichert werden, etwa auf einem permanenten oder wiederbeschreibbaren Speichermedium oder in Zuordnung zu einer Computereinrichtung oder auf einer entfernbaren CD-Rom, DVD, Blu-Ray Disc oder einem USB-Stick. Zusätzlich oder alternativ können die Computerprogramme auf einer Computereinrichtung wie etwa auf einem Server zum Herunterladen bereitgestellt werden, z.B. über ein Datennetzwerk wie das Internet oder eine Kommunikationsverbindung wie etwa eine Telefonleitung oder eine drahtlose Verbindung.

Ein weiterer Aspekt der Erfindung ist, ein autonomes Fahrzeug bereitzustellen. Das autonome Fahrzeug ist zur Durchführung der hierin beschriebenen Verfahren ausgebildet und/oder eingerichtet. Dementsprechend gelten im Rahmen der Verfahren beschriebene Merkmale für das autonome Fahrzeug und umgekehrt gelten im Rahmen des autonomen Fahrzeugs beschriebene Merkmale für die Verfahren.

Das autonome Fahrzeug umfasst mindestens eine Hardwarekomponente mit mindestens einer darin gespeicherter Softwarekomponente, welche zur Ausführung einer autonomen Fahrfunktion eingerichtet sind, und Kommunikationsmittel zur Kommunikation mit einer zentralen Einrichtung. Das autonome Fahrzeug ist eingerichtet, einen Datensatz an eine zentrale Einrichtung zu übertragen, wobei der Datensatz Angaben zu der mindestens einen Hardwarekomponente und/oder der mindestens einen Softwarekomponente des autonomen Fahrzeugs enthält. Ferner ist das autonome Fahrzeug eingerichtet, eine Bestätigung der zentralen Einrichtung zu empfangen und zu speichern sowie eine autonome Fahrfunktion abhängig von der Bestätigung freizuschalten. Des Weiteren ist das autonome Fahrzeug eingerichtet, einen eindeutigen, dem autonomen Fahrzeug zugeordneten Identifikator auszusenden, und in Abhängigkeit eines empfangenen Signals eine geforderte Aktion auszuführen.

Bei der mindestens einen Hardwarekomponente handelt es sich insbesondere um einen Computer, wobei Softwarekomponenten bevorzugt in einer diesem Computer zugeordneten Speichereinrichtung abgelegt sind. Des Weiteren können die Hardwarekomponenten beispielsweise Sensoren umfassen, welche zur Erfassung von Daten über die Umgebung des Fahrzeugs verwendet werden.

Die Kommunikationsmittel sind beispielsweise für eine drahtlose Datenübertragung mittels Mobilfunk wie LTE, UMTS oder GSM oder zur drahtlosen Datenübertragung über WLAN eingerichtet.

Ein weiterer Aspekt der Erfindung ist, eine zentrale Einrichtung zur Verwendung im Rahmen eines der beschriebenen Verfahren bereitzustellen. Im Rahmen der Verfahren beschriebene Merkmale gelten daher auch für die zentrale Einrichtung und umgekehrt gelten im Rahmen der zentralen Einrichtung beschriebene Merkmale für die Verfahren.

Die zentrale Einrichtung umfasst eine Datenverarbeitungseinrichtung sowie eine Kommunikationseinrichtung zur Kommunikation mit autonomen Fahrzeugen. Die zentrale Einrichtung ist eingerichtet, einen durch ein autonomes Fahrzeug übertragenen Datensatz mit Angaben zu mindestens einer Hardwarekomponente und/oder mindestens einer Softwarekomponente, welche für das Ausführen einer autonomen Fahrfunktion eingerichtet sind, zu empfangen und zu speichern, eine Bestätigung zur Freischaltung einer autonomen Fahrfunktion an das autonome Fahrzeug zu senden, einen durch das autonome Fahrzeug ausgesendeten Identifikator zu empfangen, die Angaben aus einem dem empfangenen Identifikator entsprechenden Datensatz oder aus dem empfangenen Identifikator dekodierte Angaben mit Informationen zu fehlerhaften Hardwarekomponenten und/oder Softwarekomponenten abzugleichen und ein Signal an das autonome Fahrzeug zum Einleiten einer Aktion zu übermitteln, falls bei dem Abgleich eine fehlerhafte Hardwarekomponente und/oder Softwarekomponente ermittelt wurde.

Bevorzugt ist die zentrale Einrichtung des Weiteren eingerichtet, aus den Angaben im durch das autonome Fahrzeug übertragenen Datensatz einen eindeutigen dem autonomen Fahrzeug zugeordneter Identifikator zu generieren. Dieser Identifikator wird anschließend als Teil der Bestätigung an das autonome Fahrzeug gesendet.

Bevorzugt ist verfügt die zentrale Einrichtung über eine Schnittstelle, welche zur Verbindung mit einem oder mehreren Verzeichnisdiensten eingerichtet ist, wobei die Verzeichnisdienste Angaben zu fehlerhaften und fehlerfreien bzw. erlaubten Hardwarekomponenten und/oder Softwarekomponenten zur Verfügung stellen. Über die Schnittstelle können die Angaben in einem Speicher der zentralen Einrichtung hinterlegt werden und/oder die zentrale Einrichtung kann aktuelle Angaben aus dem jeweiligen Verzeichnisdienst abrufen.

Bei der zentralen Einrichtung kann es sich insbesondere um eine zentrale Computereinrichtung wie einen Server, insbesondere einen Cloudserver, handeln, wobei der Computer bzw. der Server als Datenverarbeitungseinrichtung dient und mit einer Kommunikationseinrichtung, welche mit dem autonomen Fahrzeug kommunizieren kann, verbunden ist. Hierzu kann der Computer bzw. der Server mit entsprechenden Infrastrukturelementen verbunden sein, welche die drahtlose Kommunikation mit dem autonomen Fahrzeug erlauben. Des Weiteren ist es denkbar, dass der Computer bzw. der Server über das Internet mit dem autonomen Fahrzeug kommuniziert.

### Vorteile der Erfindung

Das vorgeschlagene Verfahren erlaubt es, die zur Bereitstellung einer autonomen Fahrfunktion erforderlichen Hardware- und Softwarekomponenten zentral zu registrieren, so dass eine einfache Überwachung autonomer Fahrzeuge durchgeführt werden kann. Die zur Bereitstellung der autonomen Fahrfunktion erforderlichen Hardware- und Softwarekomponenten werden beispielsweise nach der Fertigstellung des Fahrzeugs, insbesondere am Bandende in einer Fabrik, in der zentralen Einrichtung registriert. Vorteilhafterweise erfolgt erst nach dieser Registrierung die Freischaltung der autonomen Fahrfunktion, so dass diese Registrierung nicht umgangen werden kann.

Nach der Registrierung ist eine Überwachung des autonomen Fahrzeugs möglich durch Empfangen und Auswerten des durch das Fahrzeug ausgesendeten Identifikators. Wird dabei festgestellt, dass das Fahrzeug eine als fehlerhaft bekannte Hardware- oder Softwarekomponente aufweist, können sofort Aktionen als Gegenmaßnahmen eingeleitet werden. Beispielsweise kann die autonome Fahrfunktion aus Sicherheitsgründen so lange deaktiviert werden, bis die fehlerhafte Hardware- und/oder Softwarekomponente ausgetauscht bzw. aktualisiert wurde.

Durch die vorherige Registrierung des autonomen Fahrzeugs ist es bei der nachfolgenden Überwachung ausreichend, lediglich den Identifikator zu übertragen. Die detaillierten Datensätze müssen nicht wiederholt übertragen werden, was Bandbreite für die Datenübertragung einspart.

Vorteilhafterweise wird die Registrierung des autonomen Fahrzeugs nach Austausch bzw. Aktualisierung einer Hardware- oder Softwarekomponente wiederholt, so dass der zentralen Einrichtung zu jeder Zeit bekannt ist, welche autonomen Fahrzeuge mit welchen Hardware- und Softwarekomponenten betrieben werden. Die Verkehrssicherheit wird dadurch vorteilhafterweise erhöht.

### Kurze Beschreibung der Zeichnungen

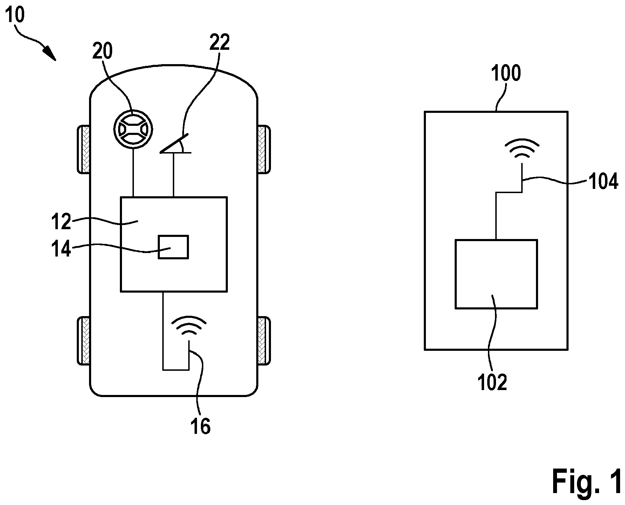

Ein Ausführungsbeispiel der Erfindung ist in der Zeichnung dargestellt und in der nachfolgenden Beschreibung näher erläutert. Die Figur stellt den Gegenstand der Erfindung nur schematisch dar. Es zeigt Figur 1 ein autonomes Fahrzeug sowie eine zentrale Einrichtung.

### Ausführungsformen der Erfindung

Figur 1 zeigt ein autonomes Fahrzeug 10, welches für das Bereitstellen einer autonomen Fahrfunktion eine als Computer ausgestaltete Hardwarekomponente 12 aufweist. Der Computer speichert eine für das Bereitstellen der autonomen Fahrfunktion erforderliche Softwarekomponente 14.

Für das Ausführen von autonomen Fahrmanövern ist die Hardwarekomponente 12 mit weiteren System im autonomen Fahrzeug 10 verbunden, was in der Figur 1 durch eine Verbindung zu einer Lenkeinheit 20 und einer Verbindung zu einer Brems- und Beschleunigungseinrichtung 22 symbolisiert wird. Das autonome Fahrzeug 10 verfügt zudem über Kommunikationsmittel 16, welche für eine Kommunikation mit einer zentralen Einrichtung 100 eingerichtet sind.

Die zentrale Einrichtung 100 umfasst eine Datenverarbeitungseinrichtung 102 sowie eine Kommunikationseinrichtung 104, welche zur Kommunikation mit dem autonomen Fahrzeug 10 eingerichtet ist.

Nach Fertigstellung des autonomen Fahrzeugs 10 sendet dieses unter Verwendung der Kommunikationsmittel 16 einen Datensatz an die zentrale Einrichtung 100, welcher beispielsweise Angaben zum Typ und Version der verwendeten Hardwarekomponente 12 und der Softwarekomponente 14 umfasst. Der Datensatz umfasst in einer Ausführungsform zudem einen Identifikator, der das autonome Fahrzeug 10 eindeutig kennzeichnet.

Der Datensatz wird durch die zentrale Einrichtung 100 empfangen und in der Datenverarbeitungseinrichtung 102 in Zuordnung zu dem Identifikator abgespeichert. Daraufhin sendet die zentrale Einrichtung 100 eine Bestätigung an das autonome Fahrzeug 10, welches diese Bestätigung abspeichert und daraufhin die autonome Fahrfunktion freischaltet.

Im Anschluss kann die autonome Fahrfunktion im Betrieb des autonomen Fahrzeugs 10 verwendet werden, wobei das autonome Fahrzeug 10 seinen Identifikator aussendet. Das Aussenden kann periodisch erfolgen, beispielsweise einmal am Tag oder bei jedem Fahrzeugneustart. Der Identifikator wird durch die zentrale Einrichtung 100 empfangen und der in Zuordnung zu dem Identifikator abgespeicherte Datensatz wird abgerufen. Anschließend werden die im abgerufenen Datensatz enthaltenen Angaben mit Informationen über fehlerhafte Hardwarekomponenten 12 und/oder Softwarekomponenten 14 verglichen. Wird eine fehlerhafte Hardwarekomponente 12 oder eine fehlerhafte Softwarekomponente 14 festgestellt, so wird durch die zentrale Einrichtung 100 ein Signal an das autonome Fahrzeug 10 übermittelt, welches das autonome Fahrzeug 10 anweist, als Aktion die autonome Fahrfunktion zu deaktivieren.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Verfahren zum Registrieren und Überwachen autonomer Fahrzeuge (10), welche mindestens eine Hardwarekomponente (12) und/oder mindestens eine Softwarekomponente (14) für das Bereitstellen einer autonomen Fahrfunktion aufweisen, umfassend die Schritte:
a. Übertragen eines Datensatzes an eine zentrale Einrichtung (100), wobei der Datensatz Angaben zu der mindestens einen Hardwarekomponente (12) und/oder der mindestens einen Softwarekomponente (14) des autonomen Fahrzeugs (10) enthält,
b. Empfangen des Datensatzes und Speichern des Datensatzes zusammen mit einem dem autonomen Fahrzeug (10) zugeordneten Identifikator durch die zentrale Einrichtung (100),
c. Senden einer Bestätigung über die erfolgreiche Speicherung an das autonome Fahrzeug (10) durch die zentrale Einrichtung (100),
d. Empfangen und Speichern der Bestätigung durch das autonome Fahrzeug (10),
e. Freischaltung der durch die mindestens eine Hardwarekomponente (12) und/oder mindestens eine Softwarekomponente (14) bereitgestellten autonomen Fahrfunktion in Abhängigkeit der gespeicherten Bestätigung durch das autonome Fahrzeug (10),
f.Aussenden des gespeicherten eindeutigen, dem autonomen Fahrzeug (10) zugeordneten Identifikators durch das autonome Fahrzeug (10),
g. Empfangen des ausgesendeten eindeutigen, dem autonomen Fahrzeug (10) zugeordneten Identifikators,
h. Abgleichen des zu diesem Identifikator in der zentralen Einrichtung (100) gespeicherten Datensatzes oder von aus dem Identifikator dekodierten Angaben mit Informationen zu fehlerhaften Hardwarekomponenten (12) und/oder Softwarekomponenten (14),
i. Übermitteln eines Signals an das autonome Fahrzeug (10) zum Einleiten einer Aktion, falls bei dem Abgleich gemäß Schritt h) eine fehlerhafte Hardwarekomponente (12) und/oder Softwarekomponente (14) ermittelt wurde,
j. Empfangen des Signals und Ausführen der geforderten Aktion durch das autonome Fahrzeug (10),
**dadurch gekennzeichnet, dass** das Übertragen des Datensatzes gemäß Schritt a) nach Austausch einer Hardwarekomponente (12) und/oder nach Aktualisierung einer Softwarekomponente (14) erfolgt.

2. Verfahren nach Anspruch 1, **dadurch gekennzeichnet, dass** die Angaben im Datensatz ausgewählt sind aus der Gruppe umfassend Fahrzeugtyp, Fahrzeugvariante, Softwaretyp, Softwareversion, Hardwaretyp, Hardwareversion, Angaben zu bereitgestellten autonomen Fahrfunktionen, Fahrgestellnummer und Kombinationen mehrerer dieser Angaben.

3. Verfahren nach Anspruch 1 oder 2, **dadurch gekennzeichnet, dass** der Datensatz als eine Angabe einen eindeutigen, dem autonomen Fahrzeug (10) zugeordneten Identifikator umfasst.

4. Verfahren nach Anspruch 1 oder 2, **dadurch gekennzeichnet, dass** durch die zentrale Einrichtung (100) aus dem gemäß Schritt b) empfangen Datensatz ein eindeutiger, dem autonomen Fahrzeug (10) zugeordneter Identifikator generiert wird, als Teil der Bestätigung gemäß Schritt c) an das autonome Fahrzeug (10) gesendet und gemäß Schritt d) durch das autonome Fahrzeug (10) gespeichert wird.

5. Verfahren nach Anspruch 4, **dadurch gekennzeichnet, dass** der eindeutige dem autonomen Fahrzeug (10) zugeordnete Identifikator ausgewählte Angaben aus dem Datensatz in kodierter Form umfasst.

6. Verfahren nach einem der Ansprüche 1 bis 5, **dadurch gekennzeichnet, dass** die Aktion ausgewählt ist aus Überführen des autonomen Fahrzeugs (10) in einen sicheren Zustand, Stilllegen des autonomen Fahrzeugs (10), Deaktivieren der autonomen Fahrfunktion, Übermitteln einer aktualisierter Softwarekomponente (14), Ausgeben einer Benachrichtigung und Kombinationen mehrerer dieser Aktionen.

7. Computerprogramm, das die durch das autonome Fahrzeug (10) auszuführenden Schritte eines Verfahrens nach einem der Ansprüche 1 bis 5 ausführt, wenn es auf einem Computer abläuft.

8. Computerprogramm, das die durch die zentrale Einrichtung (100) auszuführenden Schritte eines Verfahrens nach einem der Ansprüche 1 bis 5 ausführt, wenn es auf einem Computer abläuft.

9. Autonomes Fahrzeug (10) umfassend mindestens eine Hardwarekomponente (12) mit mindestens einer darin gespeicherter Softwarekomponente (14), welche zur Ausführung einer autonomen Fahrfunktion eingerichtet sind, und Kommunikationsmittel (16) zur Kommunikation mit einer zentralen Einrichtung (100), **dadurch gekennzeichnet, dass** das autonome Fahrzeug (10) eingerichtet ist,
a) einen Datensatz an eine zentrale Einrichtung (100) zu übertragen, wobei der Datensatz Angaben zu der mindestens einen Hardwarekomponente (12) und/oder der mindestens einen Softwarekomponente (14) des autonomen Fahrzeugs (10) enthält,
b) eine Bestätigung der zentralen Einrichtung (100) zu empfangen und zu speichern,
c) eine autonome Fahrfunktion abhängig von der Bestätigung freizuschalten,
d) einen gespeicherten eindeutigen, dem autonomen Fahrzeug (10) zugeordneten Identifikator auszusenden, und
e) in Abhängigkeit eines empfangenen Signals eine geforderte Aktion auszuführen,
**dadurch gekennzeichnet, dass** das autonome Fahrzeug (10) dazu eingerichtet ist, den Datensatz gemäß Schritt a) nach Austausch einer Hardwarekomponente (12) und/oder nach Aktualisierung einer Softwarekomponente (14) zu übertragen.

10. Zentrale Einrichtung (100) umfassend eine Datenverarbeitungseinrichtung (102) sowie eine Kommunikationseinrichtung (104) zur Kommunikation mit autonomen Fahrzeugen (10), **dadurch gekennzeichnet, dass** die zentrale Einrichtung (100) eingerichtet ist,
a. einen durch ein autonomes Fahrzeug (10) nach Austausch einer Hardwarekomponente (12) und/oder nach Aktualisierung einer Softwarekomponente (14) übertragenen Datensatz mit Angaben zu mindestens einer Hardwarekomponente (12) und/oder mindestens einer Softwarekomponente (14), welche für das Ausführen einer autonomen Fahrfunktion eingerichtet sind, zu empfangen und zu speichern,
b. eine Bestätigung zur Freischaltung einer autonomen Fahrfunktion an das autonome Fahrzeug (10) zu senden
c. einen durch das autonome Fahrzeug (10) ausgesendeten Identifikator zu empfangen,
d. Angaben zu einem dem empfangenen Identifikator entsprechenden Datensatz oder aus dem empfangenen Identifikator dekodierte Angaben mit Informationen zu fehlerhaften Hardwarekomponenten (12) und/oder Softwarekomponenten (14) abzugleichen und,
e. ein Signal an das autonome Fahrzeug (10) zum Einleiten einer Aktion zu übermitteln, falls bei dem Abgleich eine fehlerhafte Hardwarekomponente (12) und/oder Softwarekomponente (14) ermittelt wurde.

## Claims

1. Method for registering and monitoring autonomous vehicles (10) having at least one hardware component (12) and/or at least one software component (14) for providing an autonomous driving function, comprising the steps of:
a. transmitting a data set to a central device (100), wherein the data set contains details of the at least one hardware component (12) and/or the at least one software component (14) of the autonomous vehicle (10),
b. the central device (100) receiving the data set and storing the data set together with an identifier assigned to the autonomous vehicle (10),
c. the central device (100) sending a confirmation of the successful storage to the autonomous vehicle (10),
d. the autonomous vehicle (10) receiving and storing the confirmation,
e. the autonomous vehicle (10) enabling the autonomous driving function provided by the at least one hardware component (12) and/or at least one software component (14) on the basis of the stored confirmation,
f. the autonomous vehicle (10) transmitting the stored unique identifier assigned to the autonomous vehicle (10),
g. receiving the transmitted unique identifier assigned to the autonomous vehicle (10),
h. comparing the data set stored in the central device (100) for this identifier or details decoded from the identifier with information relating to faulty hardware components (12) and/or software components (14),
i. transmitting a signal to the autonomous vehicle (10) to initiate an action if a faulty hardware component (12) and/or software component (14) was determined during the comparison according to step h),
j. the autonomous vehicle (10) receiving the signal and performing the required action,
**characterized in that** the transmission of the data set according to step a) is carried out after replacing a hardware component (12) and/or after updating a software component (14).

2. Method according to Claim 1, **characterized in that** the details in the data set are selected from the group comprising vehicle type, vehicle variant, software type, software version, hardware type, hardware version, details on autonomous driving functions provided, chassis number and combinations of a plurality of these details.

3. Method according to Claim 1 or 2, **characterized in that** the data set comprises, as a detail, a unique identifier assigned to the autonomous vehicle (10).

4. Method according to Claim 1 or 2, **characterized in that** a unique identifier assigned to the autonomous vehicle (10) is generated by the central device (100) from the data set received according to step b), is sent to the autonomous vehicle (10) as part of the confirmation according to step c) and is stored by the autonomous vehicle (10) according to step d).

5. Method according to Claim 4, **characterized in that** the unique identifier assigned to the autonomous vehicle (10) comprises selected details from the data set in coded form.

6. Method according to one of Claims 1 to 5, **characterized in that** the action is selected from changing the autonomous vehicle (10) to a safe state, immobilizing the autonomous vehicle (10), deactivating the autonomous driving function, transmitting an updated software component (14), outputting a notification and combinations of a plurality of these actions.

7. Computer program which carries out the steps of a method according to one of Claims 1 to 5, which are to be carried out by the autonomous vehicle (10), when it is executed on a computer.

8. Computer program which carries out the steps of a method according to one of Claims 1 to 5, which are to be carried out by the central device (100), when it is executed on a computer.

9. Autonomous vehicle (10) comprising at least one hardware component (12) with at least one software component (14) stored therein, which are configured to perform an autonomous driving function, and communication means (16) for communicating with a central device (100), **characterized in that** the autonomous vehicle (10) is configured
a) to transmit a data set to a central device (100), wherein the data set contains details of the at least one hardware component (12) and/or the at least one software component (14) of the autonomous vehicle (10),
b) to receive and store a confirmation from the central device (100),
c) to enable an autonomous driving function on the basis of the confirmation,
d) to transmit a stored unique identifier assigned to the autonomous vehicle (10), and
e) to perform a required action on the basis of a received signal,
**characterized in that** the autonomous vehicle (10) is configured to transmit the data set according to step a) after replacing a hardware component (12) and/or after updating a software component (14).

10. Central device (100) comprising a data processing device (102) and a communication device (104) for communicating with autonomous vehicles (10), **characterized in that** the central device (100) is configured
a. to receive and store a data set which is transmitted by an autonomous vehicle (10) after replacing a hardware component (12) and/or after updating a software component (14) and contains details of at least one hardware component (12) and/or at least one software component (14) which are configured to perform an autonomous driving function,
b. to send a confirmation for enabling an autonomous driving function to the autonomous vehicle (10),
c. to receive an identifier transmitted by the autonomous vehicle (10),
d. to compare details of a data set corresponding to the received identifier or details decoded from the received identifier with information relating to faulty hardware components (12) and/or software components (14), and
e. to transmit a signal to the autonomous vehicle (10) to initiate an action if a faulty hardware component (12) and/or software component (14) was determined during the comparison.

## Revendications

1. Procédé permettant d'enregistrer et de surveiller des véhicules autonomes (10) qui présentent au moins un composant matériel (12) et/ou au moins un composant logiciel (14) pour fournir une fonction de conduite autonome, comprenant les étapes consistant à :
a) transmettre un jeu de données à un dispositif central (100), le jeu de données contenant des indications concernant ledit au moins un composant matériel (12) et/ou ledit au moins un composant logiciel (14) du véhicule autonome (10),
b) recevoir le jeu de données et stocker le jeu de données avec un identifiant associé au véhicule autonome (10), par le dispositif central (100),
c) envoyer une confirmation concernant un stockage réussi au véhicule autonome (10), par le dispositif central (100),
d) recevoir et stocker la confirmation par le véhicule autonome (10),
e) débloquer la fonction de conduite autonome fournie par ledit au moins un composant matériel (12) et/ou ledit au moins un composant logiciel (14) en fonction de la confirmation stockée, par le véhicule autonome (10),
f) émettre l'identifiant univoque stocké, associé au véhicule autonome (10), par le véhicule autonome (10),
g) recevoir l'identifiant univoque émis, associé au véhicule autonome (10),
h) comparer le jeu de données stocké pour cet identifiant dans le dispositif central (100) ou des indications décodées à partir de l'identifiant avec des informations concernant des composants matériels (12) et/ou des composants logiciels (14) défectueux,
i) transmettre un signal au véhicule autonome (10) pour entamer une action si un composant matériel (12) et/ou un composant logiciel (14) défectueux a/ont été établi(s) lors de la comparaison selon l'étape h),
j) recevoir le signal et effectuer l'action demandée, par le véhicule autonome (10),
**caractérisé en ce que** la transmission du jeu de données selon l'étape a) est effectuée après le remplacement d'un composant matériel (12) et/ou la mise à jour d'un composant logiciel (14).

2. Procédé selon la revendication 1, **caractérisé en ce que** les indications dans le jeu de données sont sélectionnées dans le groupe comprenant le type de véhicule, la variante de véhicule, le type de logiciel, la version de logiciel, le type de matériel, la version de matériel, des indications concernant des fonctions de conduite autonome fournies, le numéro de châssis et des combinaisons de plusieurs de ces indications.

3. Procédé selon la revendication 1 ou 2, **caractérisé en ce que** le jeu de données comprend en tant qu'indication un identifiant univoque associé au véhicule autonome (10).

4. Procédé selon la revendication 1 ou 2, **caractérisé en ce qu'**un identifiant univoque associé au véhicule autonome (10) est généré par le dispositif central (100) à partir du jeu de données reçu selon l'étape b), est envoyé au véhicule autonome (10) dans le cadre de la confirmation selon l'étape c), et est stocké par le véhicule autonome (10) selon l'étape d).

5. Procédé selon la revendication 4, **caractérisé en ce que** l'identifiant univoque associé au véhicule autonome (10) comprend des indications sous forme de code, sélectionnées dans le jeu de données.

6. Procédé selon l'une quelconque des revendications 1 à 5, **caractérisé en ce que** l'action est sélectionnée parmi la mise dans un état sûr du véhicule autonome (10), l'immobilisation du véhicule autonome (10), la désactivation de la fonction de conduite autonome, la transmission d'un composant logiciel mis à jour (14), la sortie d'une notification, et des combinaisons de plusieurs de ces actions.

7. Programme informatique qui, lorsqu'il est exécuté sur un ordinateur, exécute les étapes d'un procédé selon l'une quelconque des revendications 1 à 5 à exécuter par le véhicule autonome (10).

8. Programme informatique qui, lorsqu'il est exécuté sur un ordinateur, exécute les étapes d'un procédé selon l'une quelconque des revendications 1 à 5 à exécuter par le dispositif central (100).

9. Véhicule autonome (10) comprenant au moins un composant matériel (12) avec au moins un composant logiciel (14) stocké sur celui-ci qui est conçu pour effectuer une fonction de conduite autonome, et des moyens de communication (16) pour communiquer avec un dispositif central (100), **caractérisé en ce que** le véhicule autonome (10) est conçu pour
a) transmettre un jeu de données à un dispositif central (100), le jeu de données contenant des indications concernant ledit au moins un composant matériel (12) et/ou ledit au moins un composant logiciel (14) du véhicule autonome (10),
b) recevoir et stocker une confirmation du dispositif central (100),
c) libérer une fonction de conduite autonome en fonction de la confirmation,
d) émettre un identifiant univoque stocké, associé au véhicule autonome (10), et
e) effectuer une action demandée, en fonction d'un signal reçu,
**caractérisé en ce que** le véhicule autonome (10) est conçu pour transmettre le jeu de données selon l'étape a) après le remplacement d'un composant matériel (12) et/ou une mise à jour d'un composant logiciel (14).

10. Dispositif central (100), comprenant un dispositif de traitement de données (102) ainsi qu'un dispositif de communication (104) pour communiquer avec des véhicules autonomes (10), **caractérisé en ce que** le dispositif central (100) est conçu pour
a) recevoir et stocker un jeu de données transmis par un véhicule autonome (10) après le remplacement d'un composant matériel (12) et/ou après la mise à jour d'un composant logiciel (14) avec des indications concernant au moins un composant matériel (12) et/ou au moins un composant logiciel (14) qui sont conçus pour effectuer une fonction de conduite autonome,
b) envoyer au véhicule autonome (10) une confirmation pour débloquer une fonction de conduite autonome,
c) recevoir un identifiant émis par le véhicule autonome (10),
d) comparer des indications concernant un jeu de données correspondant à l'identifiant reçu ou des indications décodées à partir de l'identifiant reçu avec des informations concernant des composants matériels (12) et/ou des composants logiciels (14) défectueux, et
e) transmettre un signal au véhicule autonome (10) pour entamer une action si un composant matériel (12) et/ou un composant logiciel (14) défectueux a/ont été établi(s) lors de la comparaison.
